# FASCICULE DE BREVET EUROPEEN

(11) **EP 2 537 123 B1**
(45) Date de publication et mention de la délivrance du brevet: **27.08.2014**
(21) Numéro de dépôt: 11703689.7
(22) Date de dépôt: 15.02.2011
(51) Int. Cl.: G06K 9/00

(54) **PROCÉDÉ ET DISPOSITIF DE DÉTECTION DE L'ORIENTATION D'UNE ZONE DU CORPS D'UN INDIVIDU POSÉE SUR UNE ZONE D'APPOSITION D'UN SUPPORT D'UN CAPTEUR BIOMÉTRIQUE**
VERFAHREN UND VORRICHTUNG ZUR ERKENNUNG DER AUSRICHTUNG EINES KÖRPERBEREICHS EINER AUF EINER APPOSITIONSFLÄCHE EINES TRÄGERS EINES BIOMETRISCHEN SENSORS LIEGENDEN PERSON
METHOD AND DEVICE FOR DETECTING THE ORIENTATION OF AN AREA OF THE BODY OF AN INDIVIDUAL RESTING ON AN APPOSITION AREA OF A MOUNTING OF A BIOMETRIC SENSOR

(30) Priorité: 17.02.2010 FR 1051123
(43) Date de publication de la demande: 26.12.2012
(73) Titulaire: MORPHO, 92130 Issy Les Moulineaux (FR)
(72) Inventeur: DA SILVA, Edouard, 75015 Paris (FR); DUMONT, Denis, 75015 Paris (FR)
(74) Mandataire: Maillet, Alain
(86) Numéro de dépôt international: PCT/EP2011/052242
(87) Numéro de publication internationale: WO 2011/101357

(56) Documents cités:
- DE-A1- 10 347 316
- FR-A1- 2 913 788
- US-A1- 2008 037 001

## Description

La présente invention concerne un procédé de détection de l'orientation d'une zone du corps d'un individu posée sur une zone d'apposition d'un support d'un capteur biométrique prévu pour former une première image de la zone du corps par réflexion totale d'un rayonnement sur la zone d'apposition, et une seconde image de la zone du corps à partir d'un rayonnement propre à traverser les tissus du corps et à se réfléchir sur l'hémoglobine.

Il est connu des installations d'identification d'un individu à l'aide du relevé d'une empreinte corporelle et du réseau veineux pris sur une zone de son corps et, en particulier, à l'aide du relevé d'une empreinte digitale et du réseau veineux pris sur la dernière phalange de l'un de ses doigts.

Dans ce type d'installations, l'individu doit tout d'abord procéder à l'enregistrement préalable de ses données biométriques, en l'occurrence de l'empreinte corporelle et du réseau veineux d'une zone de son corps, en posant une zone de son corps sur une zone d'apposition d'un support d'un capteur biométrique alors prévu pour former deux images par voie optique. L'une de ces images, qui représente l'empreinte corporelle de la zone du corps de l'individu, est obtenue par réflexion totale d'un rayonnement sur la zone d'apposition, et l'autre image, qui représente le réseau veineux de la zone du corps de l'individu, est obtenue à partir d'un rayonnement propre à traverser les tissus du corps et à se réfléchir sur l'hémoglobine. On parle parfois de vision directe.

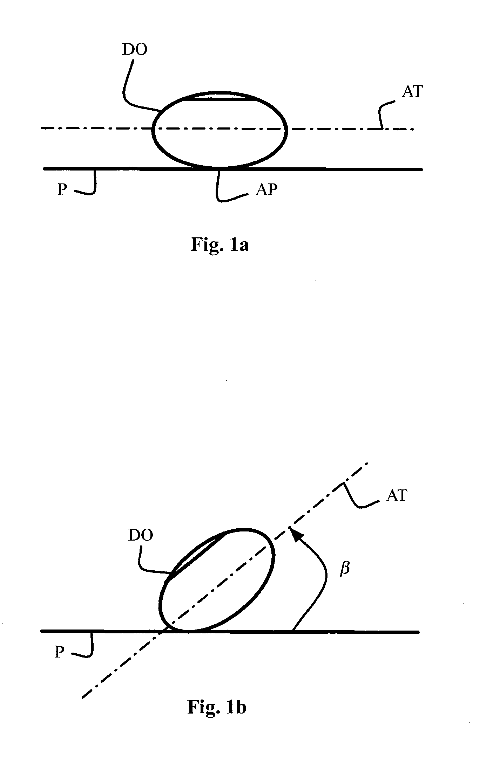

La Fig. 1a représente une vue de face d'une zone DO du corps d'un individu, en l'occurrence la dernière phalange de l'un de ses doigts, posée sur une zone d'apposition AP d'un support P d'un capteur biométrique selon une position prédéterminée dite de référence, en l'occurrence la dernière phalange du doigt est posée à plat sur le support c'est-à-dire que l'axe transversal AT du doigt est sensiblement parallèle au support P. L'image de l'empreinte corporelle et l'image du réseau veineux sont alors formées par voie optique lors de la phase d'enregistrement préalable.

Une fois l'enregistrement préalable effectué, chaque fois que cet individu doit être identifié, pour accéder par exemple à un site ou une machine à accès restreint, il doit à nouveau poser la même zone de son corps sur la zone d'apposition du support du capteur biométrique qui forme alors deux nouvelles images de la zone du corps, et l'individu est alors identifié par comparaison des images nouvellement formées, ou de données extraites à partir de ces images, avec celles formées lors de la phase d'enregistrement préalable.

Lorsque l'individu doit s'identifier, une nouvelle image de l'empreinte corporelle et une nouvelle image du réseau veineux sont formées. Il peut alors arriver que l'individu ne pose pas son doigt sur la zone d'apposition du support selon la position de référence, en l'occurrence bien à plat tel que illustré à la Fig. 1b. En d'autres termes, l'axe transversal AT et le support P forment un angle β non nul parfois appelé angle de pose. Ce mauvais positionnement du doigt, en l'occurrence la mauvaise orientation du doigt posé sur le support, peut alors entraîner une représentation sur les images de l'empreinte corporelle et/ou du réseau veineux qui est déformée au point de ne plus correspondre à celle représentée sur les images formées au cours de la phase d'enregistrement préalable, induisant alors une erreur d'identification de l'individu.

Le problème résolu par la présente invention est de fournir un procédé qui permette de détecter l'orientation d'une zone du corps d'un individu posée sur une zone d'apposition d'un support d'un capteur.biométrique prévu pour former une première image de la zone du corps par réflexion totale d'un rayonnement sur la zone d'apposition et une seconde image de la zone du corps à partir d'un rayonnement propre à traverser les tissus du corps et à se réfléchir sur l'hémoglobine.

A cet effet, la présente invention concerne un tel procédé qui est caractérisé en ce qu'il comporte une étape de détermination dans un référentiel, d'une part, de l'axe longitudinal de la zone du corps représentée sur la première image et, d'autre part, de deux bords longitudinaux de la zone du corps représentée sur la seconde image, et une étape de détermination de l'orientation de la zone du corps par rapport au support à partir de la mesure de la position relative des deux bords et de l'axe ainsi déterminés dans le référentiel.

Ainsi, lorsque la zone du corps est à nouveau posée sur la zone d'apposition du support du capteur biométrique, le procédé permet de détecter l'orientation de cette zone du corps par détermination d'un décalage entre l'empreinte corporelle et le réseau veineux représentés sur les deux images nouvellement formées.

Selon un mode de réalisation, la mesure de la position relative des deux bords et de l'axe est le rapport entre deux distances mesurées chacune dans le référentiel entre l'axe et l'un des deux bords.

Ce mode de réalisation est particulièrement simple à mettre en oeuvre car les deux images formées sur le plan image du capteur biométrique sont liées par un même référentiel et les distances peuvent être alors facilement mesurées directement sur ces images par comptage des pixels qui séparent chacun des bords et l'axe longitudinal déterminés à partir de ces deux images.

Selon un mode de réalisation, une orientation de la zone du corps par rapport au support est détectée lorsque les deux distances ne sont pas égales entre elles et le signe de l'orientation est alors donné par le signe de la différence entre ces deux distances.

Ce mode de réalisation est avantageux notamment lors d'une phase d'enregistrement préalable pour déterminer une position de référence de la zone du corps sur la zone d'apposition qui assure une représentation fidèle de la totalité de l'empreinte corporelle. Ce mode est également avantageux pour corriger le défaut de pose de la zone du corps sur la zone d'apposition comme on le verra par la suite.

Selon un mode de réalisation, une orientation de la zone du corps par rapport au support est détectée lorsque les deux distances ne sont pas égales à deux autres distances mesurées préalablement et représentant une position de référence de la zone du corps par rapport au support.

Ce mode de réalisation est avantageux car il permet de comparer l'orientation de la zone du corps par rapport au support du capteur biométrique avec une position de référence préalablement enregistrée.

Selon un mode de réalisation, la valeur de l'angle de pose formé entre l'axe transversal de la zone du corps et le support est déterminée à partir d'une table de correspondance entre couples de distances mesurées et valeurs d'angle de pose prédéterminées empiriquement.

Selon un mode de réalisation, le procédé comporte en plus une étape de correction de la représentation de la zone du corps portée par la première image à partir du signe et de la valeur de l'angle de pose ainsi déterminés.

Selon un mode de réalisation, le procédé comporte en plus une étape pour indiquer à l'individu si l'orientation de la zone de son corps par rapport au support est correcte pour son identification.

Selon l'un de ses aspects matériels, la présente invention concerne un dispositif comportant des moyens pour mettre en oeuvre l'un des procédés ci-dessus.

Selon un autre de ses aspects matériels, la présente invention concerne une installation d'identification d'individu qui comporte soit un capteur biométrique intégrant un dispositif ci-dessus, soit un capteur biométrique et un dispositif ci-dessus distincts.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
Les Fig. 1a et 1b représentent une vue de face d'une zone du corps d'un individu posée sur une zone d'apposition d'un support d'un capteur biométrique,
Les Fig. 2a et 2b représentent schématiquement un capteur biométrique prévu pour prendre une première image de la zone du corps par réflexion totale d'un rayonnement sur la zone d'apposition et une seconde image à partir d'un rayonnement propre à traverser les tissus du corps et à se réfléchir sur l'hémoglobine,
Les Fig. 3 et 4 illustrent un procédé de détection de l'orientation d'une zone du corps d'un individu posée sur une zone d'apposition d'un support d'un capteur biométrique selon la présente invention pour différentes orientations de la zone DO par rapport au support P, et
La Fig. 5 représente un schéma synoptique d'un exemple d'une installation d'identification qui comporte un dispositif selon la présente invention.

Il est connu de l'état de la technique des capteurs biométriques qui comportent un support P et qui sont prévus pour former une première image I1 de la zone DO du corps d'un individu par réflexion totale d'un rayonnement sur une zone d'apposition AP du support P, et une seconde image 12 de la zone DO à partir d'un rayonnement propre à traverser les tissus du corps et à se réfléchir sur l'hémoglobine. Le lecteur pourra se référer, par exemple, à la demande internationale déposée par le demandeur et publiée sous le numéro WO 2008/129201.

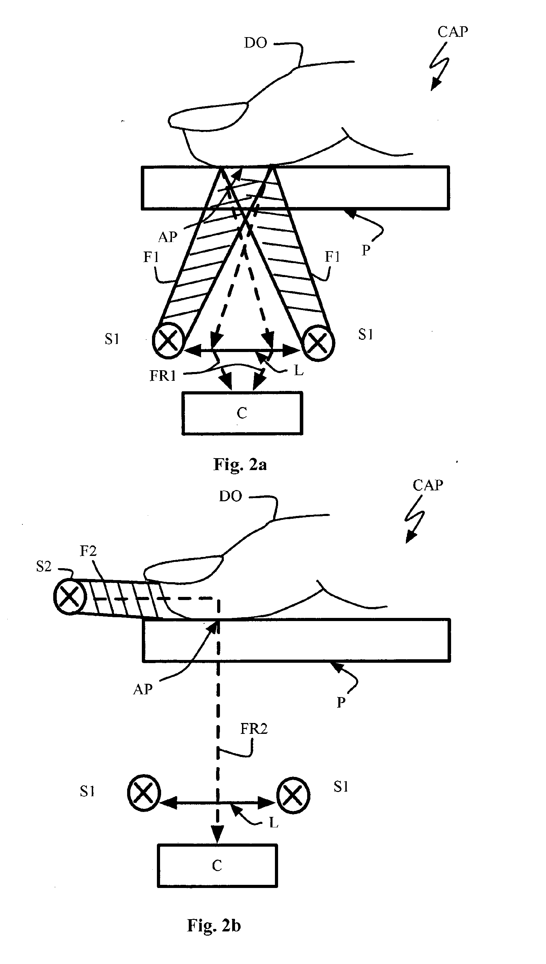

Les Fig. 2a et 2b représentent schématiquement un exemple d'un tel capteur biométrique CAP.

Le capteur biométrique CAP comporte une plaque formant un support plan P qui est au moins en partie transparent pour les rayonnements électromagnétiques utilisés (typiquement du verre ou analogue) de manière à constituer une zone d'apposition AP de la zone DO du corps (ici la première phalange d'un doigt d'une main) de l'individu.

Sous le support AP sont disposés une lentille L de focalisation et des moyens capteurs C propres à détecter deux rayonnements électromagnétiques ayant des longueurs d'ondes distinctes, soit que les capteurs utilisés sont sensibles à ces deux longueurs d'ondes, soit qu'il est prévu un double réseau de capteurs sensibles respectivement aux deux longueurs d'ondes.

Des premiers moyens d'éclairage S1 (par exemple sous forme de diodes LED) sont placés autour de la lentille L et disposés pour éclairer approximativement frontalement la zone DO du corps placée au contact de la zone d'apposition AP du support P. Les premiers moyens d'éclairage S1 émettent un premier faisceau lumineux F1 comprenant un rayonnement ayant une première longueur d'onde telle que le rayonnement soit propre à ne pas traverser les tissus du corps pour que ce rayonnement, une fois réfléchi sur la zone d'apposition AP, référencé FR1 et représenté en traits pointillés sur la Fig. 2a, véhicule les informations optiques de l'empreinte corporelle. Typiquement, cette longueur d'onde est située dans le rouge, et est par exemple de l'ordre de 650nm.

Des seconds moyens d'éclairage S2 (par exemple sous forme de diodes LED) sont disposés de manière à éclairer latéralement la zone DO du corps posée sur la zone d'apposition AP du support P. Les seconds moyens d'éclairage S2 émettent un second faisceau lumineux F2 comprenant un rayonnement ayant une seconde longueur d'onde telle que le rayonnement soit propre à traverser les tissus du corps et soit réfléchi par l'hémoglobine, autrement dit par le réseau veineux de la zone DO. Typiquement, cette longueur d'onde est située dans le proche infrarouge, et est par exemple de l'ordre de 950 nm. On a représenté en pointillés le rayonnement réfléchi FR2 qui véhicule l'information optique du réseau veineux de la zone DO.

En variante, on peut utiliser des moyens d'éclairage uniques et/ou un élément optique prismatique tel que décrit dans la demande internationale publiée sous le numéro WO 2008/129201.

De manière générale, la présente invention concerne un procédé de détection de l'orientation de la zone IDO du corps d'un individu posée sur la zone d'apposition AP du support P d'un capteur biométrique CAP tel que par exemple celui décrit en relation avec les Figs. 2a et 2b.

Suite à l'acquisition de deux images I1 et I2 par le capteur CAP ou, en variante, à des images I1 et 12 préalablement acquises et mémorisées ou à des données extraites de ces deux images, le procédé débute par une étape de détermination dans un référentiel PI, d'une part, de deux bords longitudinaux B1 et B2 de la zone du corps représentée sur la seconde image 12 et, d'autre part, de l'axe longitudinal A de la zone du corps représentée sur la première image I1. Cette étape est suivie d'une étape de détermination de l'orientation de la zone du corps DO par rapport au support P à partir de la mesure de la position relative des deux bords B1, B2 et de l'axe A ainsi déterminés dans le référentiel PI.

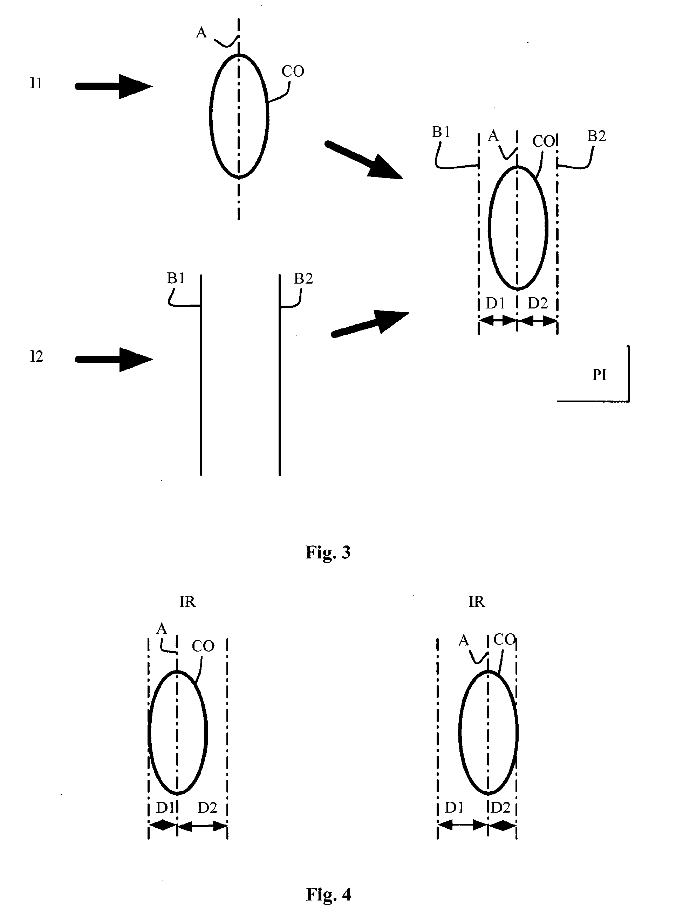

Les Fig. 3 et 4 illustrent ce procédé pour différentes orientations de la zone DO par rapport au support P.

Sur la gauche de la Fig. 3, sont représentées schématiquement les bords longitudinaux B1 et B2 de la zone DO représentée sur l'image I2, c'est-à-dire les bords longitudinaux de la représentation du réseau veineux portée par l'image 12, et l'axe longitudinal A de l'empreinte corporelle CO représentée sur l'image I1. I1 existe de multiples façons connues pour déterminer les bords B1 et B2 à partir de l'image 12 et l'axe A à partir de l'image I1. Par exemple, on peut utiliser un algorithme de détermination de volume englobant dont le but est de déterminer un rectangle englobant la représentation du réseau veineux portée par l'image 12 et un autre rectangle englobant la représentation de l'empreinte corporelle portée par l'image I1. Les bords B1, B2 et l'axe A sont alors aisément obtenus à partir de ces rectangles. On peut également utiliser un algorithme d'extraction de points de contours qui, appliqué sur l'image I1, définit le contour de l'empreinte corporelle à partir duquel il est aisé de définir l'axe longitudinal A et qui, appliqué sur l'image 12, détermine directement les bords B1 et B2.

Selon un mode de réalisation, la mesure de la position relative des deux bords B1, B2 et de l'axe A est le rapport entre deux distances D1, D2 mesurées chacune dans le référentiel PI entre l'axe A et l'un des deux bords B1, B2, tel que illustré sur la droite de la Fig. 3. La distance D1 est définie entre l'axe A et un bord B1 et la distance D2 est définie entre cet axe A et le bord B2.

Selon un mode de réalisation, le référentiel PI est un plan image, par exemple celui du capteur CAP, et les distances D1 et D2 sont mesurées par calcul du nombre de pixels entre l'axe A et un des bords B1, B2.

Selon un mode de réalisation, une orientation de la zone DO du corps par rapport au support P est détectée lorsque la distance D1 n'est pas égale à la distance D2 et le signe de l'orientation est alors donné par le signe de la différence D2-D1.

Sur la droite de la Fig. 3, les distances D1 et D2 sont égales entre elles ce qui correspond au cas où l'angle de pose β est nul.

Sur la gauche de la Fig. 4 est représenté le cas où l'angle de pose est positif, c'est-à-dire que D2>D1 et à droite le cas où l'angle de pose est négatif, c'est-à-dire D1>D2.

Selon un mode de réalisation, une orientation de la zone DO du corps par rapport au support P est détectée lorsqu'un couple de distances (D1, D2) n'est pas égal à un couple de distances mesurées préalablement et représentant une position de référence de la zone DO du corps par rapport au support P. Cette position de référence est par exemple définie lors d'une phase d'enregistrement préalable (enrôlement) tel que expliqué précédemment.

Selon un mode de réalisation, la valeur de l'angle de pose β est déterminée à partir d'une table de correspondance T entre couples de distances mesurées et valeurs d'angle de pose prédéterminées empiriquement. Par exemple, chaque valeur d'angle de pose correspond à des différences des distances D2 et D1 comprises entre une borne inférieure et une borne supérieure : la valeur d'angle de 5° correspond à des différences des distances D2 et D1 non nulles et inférieures à 5 pixels, la valeur de 10° correspond à des différences des distances D2 et D1 comprises entre 6 et 10 pixels...

Le procédé peut alors comporter, selon un mode de réalisation, une étape de correction de la représentation de la zone DO du corps portée par la première image I1, c'est-à-dire de la représentation CO de l'empreinte corporelle, à partir du signe et de la valeur de l'angle de pose ainsi déterminée. Cette correction consiste, par exemple, à appliquer une transformation géométrique à la représentation CO. Cette transformation est par exemple une rotation du plan qui supporte cette représentation CO d'un angle égal à la valeur de l'angle de pose, rotation qui peut être complétée par une translation de manière à obtenir une distance D1 égale à la distance D2.

Selon un mode de réalisation, le procédé comporte en plus une étape pour indiquer à l'individu si l'orientation de la zone DO de son corps par rapport au support P est correcte pour l'identification. Le procédé peut alors être prévu pour demander à l'individu de repositionner la zone de son corps sur la zone d'apposition tant que l'orientation de cette zone n'est pas correcte, c'est-à-dire tant que les distances D1 et D2 soit ne sont pas égales entre elles, soit ne sont pas égales à un couple de distances qui définit une position de référence.

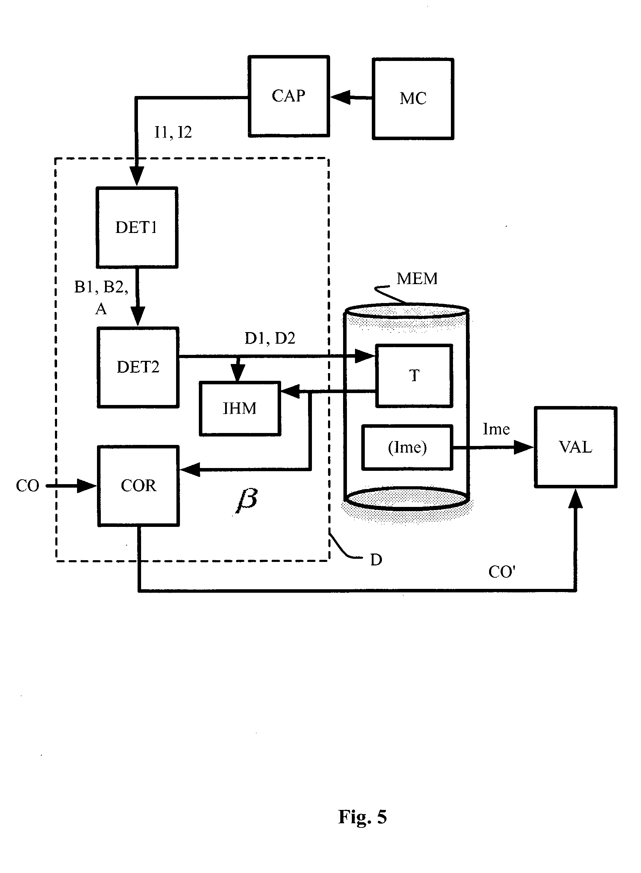

Un exemple d'une installation d'identification d'un individu selon la présente invention est représenté à la Fig. 5.

L'installation comporte un capteur biométrique CAP tel que par exemple celui des Figs. 2a et 2b. Dans ce cas, l'installation comporte également des moyens de commande (microcontrôleur) MC qui pilotent les moyens capteurs C et les moyens d'éclairage S1 et S2 de manière à capturer, soit séquentiellement, soit simultanément, deux images I1 et 12, l'une (I1) représentant l'empreinte corporelle et l'autre (12) représentant le réseau veineux.

De plus, l'installation comporte des moyens MEM de mémorisation dans lesquels sont tenus en mémoire des couples de données (Imv, Ime) formés chacun de données Ime extraites de la première image I1 (image de l'empreinte corporelle de la zone du corps DO de l'individu) et de données Imv extraites de la seconde image 12 (image du réseau veineux de la zone du corps DO) ; ces couples de données (Imv, Ime) sont capturés et mis en mémoire au cours d'une étape préliminaire d'enregistrement (enrôlement) d'un individu, la zone du corps DO occupant alors une position qui est prise comme position de référence.

L'installation comporte également un dispositif D de détection de l'orientation de la zone DO du corps d'un individu par rapport au support P.

Selon un mode de réalisation, le dispositif D est intégré au capteur CAP et selon un autre mode, tel que illustré à la Fig. 5, le dispositif D est distinct de ce capteur.

Le dispositif D comporte des moyens DET1 pour déterminer dans le référentiel PI, d'une part, l'axe longitudinal A de la zone du corps DO représentée sur la première image I1 et, d'autre part, deux bords longitudinaux B1 et B2 de la zone du corps représentée sur une seconde image 12. Par exemple, ce référentiel PI est donné par superposition des deux images I1 et I2 définit alors sur un même plan image et des instructions d'un programme d'ordinateur sont alors mises en oeuvre pour extraire les bords B1 et B2 et l'axe A tel que expliqué précédemment.

Le dispositif D comporte également des moyens DET2 pour déterminer l'orientation de la zone du corps DO par rapport au support P à partir de la mesure de la position relative des deux bords B1, B2 et de l'axe A ainsi déterminés dans le référentiel PI.

Les moyens DET1 et DET2 sont, selon un mode de réalisation, mis en oeuvre par un programme d'ordinateur stocké sur un support d'informations, tel que par exemple la mémoire MEM, ledit programme comportant alors des instructions permettant de mettre en oeuvre l'un des procédés de détection ci-dessus lorsqu'il est chargé et exécuté par le dispositif D muni à cet effet de moyens de calcul et de mémoire non représentés sur la Fig. 5.

Selon un mode de réalisation, le dispositif D comporte également des moyens COR pour corriger la représentation CO telle que expliquée précédemment.

Selon un mode de réalisation, la mémoire MEM comporte également une table T de correspondance entre couples de distances mesurées et valeurs d'angle de pose prédéterminées empiriquement. Ainsi, lorsque les distances D1 et D2 ont été déterminées par les moyens DET2, ces distances sont envoyées à la mémoire MEM qui retourne aux moyens COR une valeur de l'angle de pose.

Selon un mode de réalisation, le dispositif D comporte en plus une interface graphique IHM qui est prévue pour indiquer à l'individu si l'orientation de la zone de son corps par rapport au support O est correcte pour l'identification. Cette interface IHM peut également être prévue pour indiquer le signe et/ou la valeur de l'angle de pose et/ou les distances issues des moyens DET2.

Pour permettre l'identification de l'individu, l'installation comporte également une unité de validation VAL qui est prévue pour recevoir la représentation CO de l'empreinte corporelle portée par la première image 11 ou, selon un mode de réalisation, une version modifiée CO' de cette représentation qui est issue des moyens COR, et des données Ime de l'empreinte corporelle tenues en mémoire dans les moyens MEM de mémorisation, pour comparer soit la représentation CO soit la représentation CO' avec lesdites données Ime, et pour délivrer un signal représentatif du résultat de la comparaison, notamment une validation ou une invalidation (par exemple une confirmation ou une non confirmation d'identité, un accord ou un refus d'accès,...).

Ainsi, selon cet exemple d'installation, la cartographie du réseau veineux est simplement exploitée en tant que critère auxiliaire propre à déterminer l'angle de pose de la zone DO du corps sur la zone d'apposition AP et l'image d'empreinte corporelle CO ou sa version corrigée CO', selon un mode de réalisation, demeure le critère unique d'identification. D'autres exploitations des images acquises de l'empreinte corporelle et du réseau veineux peuvent être mises en oeuvre pour l'identification de l'individu sans pour cela sortir du cadre de la présente invention.

## Revendications

1. Procédé de détection de l'angle de pose d'une zone (DO) du corps d'un individu apposé sur une zone d'apposition (AP) d'un support (P) d'un capteur biométrique prévu pour former une première image (I1) de la zone (DO) du corps par réflexion totale d'un rayonnement sur la zone d'apposition (AP), et une seconde image (I2) de la zone (DO) du corps à partir d'un rayonnement propre à traverser les tissus du corps et à se réfléchir sur l'hémoglobine, **caractérisé en ce qu'**il comporte
- une étape de détermination dans un référentiel, d'une part, de l'axe longitudinal (A) de la zone du corps représentée sur la première image (I1) et, d'autre part, de deux bords longitudinaux (B1, B2) de la zone du corps représentée sur la seconde image (I2), et
- une étape de détermination de l'angle de pose de ladite zone (DO) du corps à partir de la mesure de la position relative des deux bords (B1, B2) et de l'axe (A) ainsi déterminés dans le référentiel.

2. Procédé selon la revendication 1, dans lequel la mesure de la position relative des deux bords (B1, B2) et de l'axe (A) est le rapport entre deux distances (D1, D2) mesurées chacune dans le référentiel entre l'axe (A) et l'un des deux bords (B1, B2).

3. Procédé selon la revendication 2, dans lequel un angle de pose non nul par rapport au support est détecté lorsque les deux distances ne sont pas égales entre elles et le signe de cet angle de pose est alors donné par le signe de la différence entre ces deux distances.

4. Procédé selon la revendication 2, dans lequel un angle de pose non correcte de la zone du corps par rapport au support est détecté lorsque les deux distances ne sont pas égales à deux autres distances mesurées préalablement et représentant une position de référence de la zone du corps par rapport au support.

5. Procédé selon l'une des revendications 2 à 4, dans lequel la valeur de l'angle de pose formé entre l'axe transversal (AT) de la zone (DO) du corps et le support (P) est déterminée à partir d'une table (T) de correspondance entre couples de distances mesurées et valeurs d'angle de pose prédéterminées empiriquement.

6. Procédé selon la revendication 5, qui comporte en plus une étape de correction de la représentation de la zone du corps portée par la première image (I1) à partir du signe et de la valeur de l'angle de pose ainsi déterminés.

7. Procédé selon l'une des revendications précédentes, qui comporte une étape pour indiquer à l'individu si la valeur de l'angle de pose de la zone de son corps par rapport au support est correcte pour son identification.

8. Dispositif de détection de l'angle de pose d'une zone (DO) du corps d'un individu posée sur une zone d'apposition (AP) d'un support d'un capteur biométrique prévu pour former une première image (I1) de la zone (DO) du corps par réflexion totale d'un rayonnement sur la zone d'apposition (AP), et une seconde image (I2) de la zone (DO) du corps à partir d'un rayonnement propre à traverser les tissus du corps et à se réfléchir sur l'hémoglobine, **caractérisé en ce qu'**il comporte
- des moyens (DET1) de détermination dans un référentiel, d'une part, de l'axe longitudinal (A) de la zone du corps représentée sur la première image et, d'autre part, de deux bords longitudinaux (B1, B2) de la zone du corps représentée sur la seconde image, et
- des moyens (DET2) de détermination de l'angle de pose de la zone du corps par rapport au support à partir de la mesure de la position relative des deux bords (B1, B2) et de l'axe (A) ainsi déterminés dans le référentiel.

9. Capteur biométrique comportant un support (P) et prévu pour former une première image (I1) d'une zone (DO) du corps d'un individu posée sur une zone d'apposition (AP) du support (P) par réflexion totale d'un rayonnement sur la zone d'apposition (AP), et une seconde image (I2) de la zone (DO) du corps à partir d'un rayonnement propre à traverser les tissus du corps et à se réfléchir sur l'hémoglobine, **caractérisé en ce qu'**il intègre un dispositif conforme à la revendication 8.

10. Installation d'identification comprenant un capteur biométrique (CAP) prévu pour former une première image (I1) d'une zone (DO) du corps d'un individu posée sur une zone d'apposition (AP) d'un support (P) du capteur (CAP) par réflexion totale d'un rayonnement sur la zone d'apposition (AP), et une seconde image (I2) de la zone (DO) du corps à partir d'un rayonnement propre à traverser les tissus du corps et à se réfléchir sur l'hémoglobine, **caractérisée en ce qu'**elle comporte un dispositif conforme à la revendication 8 qui est soit intégré au capteur soit distinct du capteur.

11. Programme d'ordinateur stocké sur un support d'informations, ledit programme comportant des instructions permettant de mettre en oeuvre le procédé selon l'une des revendications 1 à 6, lorsqu'il est chargé et exécuté par un dispositif conforme à la revendication 8.

## Patentansprüche

1. Verfahren zur Erfassung des Auflegewinkels einer Zone (DO) des Körpers einer Person, die auf eine Auflegezone (AP) eines Trägers (P) eines biometrischen Sensors aufgelegt wird, der vorgesehen ist, um ein erstes Bild (I1) der Zone (DO) des Körpers durch vollständige Reflexion einer Strahlung auf die Auflegezone (AP) und ein zweites Bild (12) der Zone (DO) des Körpers ausgehend von einer Strahlung zu formen, die die Gewebe des Körpers durchqueren und vom Hämoglobin reflektiert werden kann, **dadurch gekennzeichnet, dass** es aufweist
- einen Schritt der Bestimmung, in einem Bezugssystem, einerseits der Längsachse (A) der im ersten Bild (11) dargestellten Zone des Körpers und andererseits von zwei Längsrändern (B1, B2) der im zweiten Bild (12) dargestellten Zone des Körpers, und
- einen Schritt der Bestimmung des Auflegewinkels der Zone (DO) des Körpers ausgehend von der Messung der relativen Stellung der so bestimmten zwei Ränder (B1, B2) und der Achse (A) in dem Bezugssystem.

2. Verfahren nach Anspruch 1, wobei die Messung der relativen Stellung der zwei Ränder (B1, B2) und der Achse (A) das Verhältnis zwischen zwei Abständen (D1, D2) ist, die jeweils im Bezugssystem zwischen der Achse (A) und einem der zwei Ränder (B1, B2) gemessen werden.

3. Verfahren nach Anspruch 2, wobei ein Auflegewinkel ungleich Null bezüglich des Trägers erfasst wird, wenn die zwei Abstände einander nicht gleich sind, und das Vorzeichen dieses Auflegewinkels sich dann durch das Vorzeichen der Differenz zwischen diesen zwei Abständen ergibt.

4. Verfahren nach Anspruch 2, wobei ein nicht korrekter Auflegewinkel der Zone des Körpers bezüglich des Trägers erfasst wird, wenn die zwei Abstände nicht gleich zwei anderen Abständen sind, die vorher gemessen wurden und eine Bezugsstellung der Zone des Körpers bezüglich des Trägers darstellen.

5. Verfahren nach einem der Ansprüche 2 bis 4, wobei der Wert des zwischen der Querachse (AT) der Zone (DO) des Körpers und dem Träger (P) geformten Auflegewinkels ausgehend von einer Entsprechungstabelle (T) zwischen Paaren von gemessenen Abständen und empirisch vorbestimmten Auflegewinkelwerten bestimmt wird.

6. Verfahren nach Anspruch 5, das außerdem einen Schritt der Korrektur der Darstellung der im ersten Bild (I1) enthaltenen Zone des Körpers ausgehend von den so bestimmten Vorzeichen und dem Wert des Auflegewinkels aufweist.

7. Verfahren nach einem der vorhergehenden Ansprüche, das einen Schritt aufweist, um der Person anzuzeigen, ob der Wert des Auflegewinkels der Zone seines Körpers bezüglich des Trägers für seine Identifikation korrekt ist.

8. Vorrichtung zur Erfassung des Auflegewinkels einer Zone (DO) des Körpers einer Person, die auf eine Auflegezone (AP) eines Trägers (P) eines biometrischen Sensors aufgelegt wird, der vorgesehen ist, um ein erstes Bild (11) der Zone (DO) des Körpers durch vollständige Reflexion einer Strahlung auf die Auflegezone (AP) und ein zweites Bild (12) der Zone (DO) des Körpers ausgehend von einer Strahlung zu formen, die die Gewebe des Körpers durchqueren und vom Hämoglobin reflektiert werden kann, **dadurch gekennzeichnet, dass** sie aufweist
- Einrichtungen (DET1) zur Bestimmung, in einem Bezugssystem, einerseits der Längsachse (A) der im ersten Bild (I1) dargestellten Zone des Körpers und andererseits von zwei Längsrändern (B1, B2) der im zweiten Bild (12) dargestellten Zone des Körpers, und
- Einrichtungen (DET2) zur Bestimmung des Auflegewinkels der Zone des Körpers bezüglich des Trägers ausgehend von der Messung der relativen Stellung der so bestimmten zwei Ränder (B1, B2) und Achse (A) in dem Bezugssystem.

9. Biometrischer Sensor, der einen Träger (P) aufweist und vorgesehen ist, um ein erstes Bild (I1) einer auf eine Auflegezone (AP) des Trägers (P) aufgelegten Zone (DO) des Körpers einer Person durch vollständige Reflexion einer Strahlung auf die Auflegezone (AP) und ein zweites Bild (12) der Zone (DO) des Körpers ausgehend von einer Strahlung zu formen, die die Gewebe des Körpers durchqueren und vom Hämoglobin reflektiert werden kann, **dadurch gekennzeichnet, dass** er eine Vorrichtung nach Anspruch 8 umfasst.

10. Identifikationsanlage, die einen biometrischen Sensor (CAP) aufweist, der vorgesehen ist, um ein erstes Bild (I1) einer auf eine Auflegezone (AP) eines Trägers (P) des Sensors (CAP) aufgelegten Zone (DO) des Körpers einer Person durch vollständige Reflexion einer Strahlung auf die Auflegezone (AP) und ein zweites Bild (12) der Zone (DO) des Körpers ausgehend von einer Strahlung zu formen, die die Gewebe des Körpers durchqueren und vom Hämoglobin reflektiert werden kann, **dadurch gekennzeichnet, dass** sie eine Vorrichtung nach Anspruch 8 aufweist, die entweder in den Sensor integriert oder vom Sensor getrennt ist.

11. Computerprogramm, das auf einem Informationsträger gespeichert ist, wobei das Programm Anweisungen aufweist, die es ermöglichen, das Verfahren nach einem der Ansprüche 1 bis 6 anzuwenden, wenn es in eine Vorrichtung nach Anspruch 8 geladen ist und von ihr ausgeführt wird.

## Claims

1. Method for detecting the orientation of an area (DO) of the body of an individual placed on an apposition area (AP) of a biometric sensor mounting (P) designed to form a first image (I1) of the area (DO) of the body by total reflection of radiation on the apposition area (AP), and a second image (12) of the area (DO) of the body from radiation able to pass through the tissues of the body and to be reflected on haemoglobin, **characterised in that** it comprises
- a step of determining in a reference frame firstly the longitudinal axis (A) of the area of the body depicted in the first image and secondly two longitudinal edges (B 1, B2) of the area of the body depicted in the second image, and
- a step of determining the orientation of the area of the body with respect to the mounting from the measurement of the relative positions of the two edges (B1, B2) and the axis (A) thus determined in the reference frame.

2. Method according to claim 1, in which the measurement of the relative positions of the two edges (B1, B2) and the axis (A) is the ratio between two distances (D1, D2) each measured in the reference frame between the axis (A) and one of the two edges (B 1, B2).

3. Method according to claim 2, in which an orientation of the area of the body with respect to the mounting is detected when the two distances are not equal to each other and the sign of the orientation is then given by the sign of the difference between these two distances.

4. Method according to claim 2, in which an orientation of the area of the body with respect to the mounting is detected when the two distances are not equal to two other distances measured previously and representing a reference position of the area of the body with respect to the mounting.

5. Method according to one of claims 2 to 4, in which the placing angle formed between the transverse axis (AT) of the area (DO) of the body and the mounting (P) is determined from a look-up table (T) between pairs of distances measured and placing angles predetermined empirically.

6. Method according to claim 5, which also comprises a step of correcting the representation of the area of the body carried by the first image (I1) from the sign and value of the placing angle thus determined.

7. Method according to one of the preceding claims, which comprises a step for indicating to the individual whether the orientation of the area of his body with respect to the mounting is correct for his identification.

8. Device for detecting the orientation of an area (DO) of the body of an individual placed on an apposition area (AP) of a biometric sensor mounting (P) designed to form a first image (I1) of the area (DO) of the body by total reflection of radiation on the apposition area (AP), and a second image (12) of the area (DO) of the body from radiation able to pass through the tissues of the body and to be reflected on haemoglobin, **characterised in that** it comprises
- means (DET1) for determining in a reference frame firstly the longitudinal axis (A) of the area of the body depicted in the first image and secondly two longitudinal edges (B1, B2) of the area of the body depicted in the second image, and
- means (DET2) for determining the orientation of the area of the body with respect to the mounting from the measurement of the relative positions of the two edges (B1, B2) and the axis (A) thus determined in the reference frame.

9. Biometric sensor comprising a mounting (P) and designed to form a first image (I1) of an area (DO) of the body of an individual placed on an apposition area (AP) of the mounting (P) by total reflection of radiation on the apposition area (AP), and a second image (12) of the area (DO) of the body from radiation able to pass through the tissues of the body and to be reflected on haemoglobin, **characterised in that** it includes a device according to claim 8.

10. Identification installation comprising a biometric sensor (CAP) designed to form a first image (I1) of an area (DO) of the body of an individual placed on an apposition area (AP) of a mounting (P) of the sensor (CAP) by total reflection of radiation on the apposition area (AP), and a second image (12) of the area (DO) of the body from radiation able to pass through the tissues of the body and be reflected on haemoglobin, **characterised in that** it comprises a device according to claim 8 that is either integrated in the sensor or separate from the sensor.

11. Computer program stored on an information carrier, said program containing instructions for implementing the method according to one of claims 1 to 6, when it is loaded into and executed by a device according to claim 8.
